# DEMANDE DE BREVET EUROPEEN

(11) **EP 3 786 728 A1**
(43) Date de publication de la demande: **03.03.2021**
(21) Numéro de dépôt: 19193935.4
(22) Date de dépôt: 27.08.2019
(51) Int. Cl.: G04D 7/00, G01L 1/00, G04B 31/06, G01J 3/44, G01N 21/00

(54) **MÉTHODE DE CONTRÔLE D'UN ASSEMBLAGE DE COMPOSANTS MICROMÉCANIQUES PAR SPECTROSCOPIE RAMAN ET APPAREIL DE CONTRÔLE POUR EXÉCUTER LADITE MÉTHODE**

(71) Demandeur: Association Suisse pour la Recherche Horlogère, 2000 Neuchâtel (CH)
(72) Inventeur: Marquis Weible, Fabienne, 2000 Neuchâtel (CH); Vallat, Evelyne, 2054 Chézard St.Martin (CH)
(74) Mandataire: P&TS SA (AG, Ltd.)

(57) **Abrégé**

Méthode de contrôle de la qualité d'un assemblage d'au moins un premier composant (20) avec un second composant (21), au moins l'un des composants présentant des contraintes mécaniques d'assemblage; la méthode comportant les étapes de: fournir un système de spectrométrie Raman (10) configuré pour mesurer un spectre Raman; mesurer un spectre Raman pour au moins l'un des composants assemblés et présentant des contraintes mécaniques d'assemblage; déterminer un nombre d'onde pour au moins un pic du spectre Raman mesuré; calculer un décalage Raman correspondant à la différence entre le nombre d'onde déterminé et un nombre d'onde de référence; et déterminer une première valeur de seuil (S1) sur la base du décalage, de manière à caractériser la qualité de l'assemblage. Appareil de contrôle configuré pour exécuter la méthode.

## Description

### Domaine technique

La présente invention concerne la caractérisation non-destructive d'un assemblage entre deux composants micromécaniques. En particulier, la présente invention concerne une méthode de contrôle d'un assemblage de composants micromécaniques par spectroscopie Raman, ainsi qu'un appareil de contrôle pour exécuter ladite méthode.

### Etat de la technique

Le procédé de chassage consistant à assembler un élément en le forçant dans un alésage préalablement usiné est très répandu en horlogerie mécanique, en particulier pour l'assemblage des pierres dans des platines. Les pierres chassées, généralement des rubis remplissent la fonction de palier : elles reçoivent les axes de différentes pièces mobiles et permettent de minimiser les pertes par frottement générées par la rotation de ceux-ci. Le procédé de chassage à l'échelle horlogère étant soumis à de nombreux facteurs d'influence, il est relativement complexe à contrôler. L'un des facteurs d'influence principal du procédé de chassage est l'interférence, définie par la différence entre le diamètre de la pierre et le diamètre de l'alésage dans lequel la pierre est chassée. A l'échelle horlogère, celle-ci est de l'ordre de quelques microns et demande à être précisément maîtrisée. Les précision d'usinage et la caractérisation dimensionnelle des pierres et des alésages arrivent ici à leur limites.

En pratique, le procédé de chassage peut être suivi en mesurant la force de chassage en jeu. Si la force de chassage est un paramètre utile dans le contrôle du procédé, le suivi de ce paramètre ne permet pas d'identifier un assemblage défectueux, c'est-à-dire un assemblage où la pierre ne résiste pas à la sollicitation axiale ou radiale à laquelle elle est soumise en opération. De même, un problème de casse de la pierre intervenant durant le procédé n'apparaît pas forcément sur l'enregistrement de la force de chassage pendant l'opération. Le contrôle de la casse des pierres chassées est réalisé sous la forme d'une inspection visuelle permettant à un opérateur de constater l'absence ou la présence de fissure dans la pierre. Ce type de contrôle est fastidieux et nécessite un grand savoir-faire car il n'est pas toujours facile de détecter visuellement des microfissures dans les pierres chassées, surtout celles se propageant parallèlement à la surface libre des pierres. Quant au contrôle de la tenue axiale, il nécessite le déchassage des pierres et par conséquent détruit (ou du moins modifie) l'assemblage à contrôler. Ainsi une méthode sans contact et non-destructive permettant de contrôler la qualité finale de l'assemblage serait avantageuse à introduire dans le secteur.

### Bref résumé de l'invention

La présente invention concerne une méthode de contrôle de la qualité d'un assemblage d'au moins un premier composant micromécanique avec un second composant micromécanique, la méthode comportant les étapes de:
fournir un système de spectrométrie Raman configuré pour mesurer un spectre Raman;
fournir ledit au moins un premier composant assemblé au second composant, au moins l'un des composants présentant des contraintes mécaniques d'assemblage lorsqu'assemblés;
mesurer un spectre Raman pour au moins l'un des composants assemblés et présentant des contraintes mécaniques d'assemblage, le spectre Raman comportant au moins un pic;
déterminer un nombre d'onde pour ledit au moins un pic du spectre Raman mesuré;
calculer un décalage Raman correspondant à la différence entre le nombre d'onde du pic déterminé et un nombre d'onde de référence; et
déterminer une première valeur de seuil sur la base du décalage, de manière à caractériser la qualité de l'assemblage.

La présente invention concerne également un appareil de contrôle, comportant un système de spectrométrie Raman comprenant une source lumineuse destinée à émettre une lumière d'excitation, un système optique destiné à guider la lumière d'excitation vers des points de mesure du composant à caractériser, un dispositif de détection d'une lumière émise par les points de mesure sous l'effet de la diffusion, un dispositif d'analyse de la lumière diffusée destiné à mesurer un spectre Raman de la lumière diffusée; l'appareil étant configuré pour exécuter la méthode.

La méthode de contrôle est non-destructive et peut être appliquée à la mesure des contraintes dans de nombreux matériaux, tels que le rubis, le diamant, le silicium, les céramiques, etc. La méthode de contrôle permet d'obtenir une résolution spatiale micrométrique, par exemple, un diamètre de faisceau sur le composant autour de 2 µm et un volume sondé de quelques dizaines de um³ ou moins. La méthode de contrôle est facile à mettre en oeuvre et rapide. En effet, la mesure d'un spectre Raman peut ne prendre que quelques dizaines de secondes. La méthode de contrôle peut être facilement industrialisée.

### Brève description des figures

Des exemples de mise en oeuvre de l'invention sont indiqués dans la description illustrée par les figures annexées dans lesquelles :
la figure 1 illustre schématiquement un système de spectrométrie Raman;
la figure 2a montre une vue de dessus d'un premier composant chassé dans un alésage d'un second composant alors que la figure 2b montre une vue en section et la figure 2c montre une vue en éclaté du premier composant avant le chassage dans l'alésage du second composant;
la figure 3 reporte des valeurs de la contrainte mécanique statique d'assemblage en fonction de l'interférence;
la figure 4 montre un spectre Raman obtenu sur un premier composant en rubis chassé dans l'alésage du second composant, et sur un composant de référence;
La figure 5 montre un détail du pic autour de 416 cm⁻¹, mesuré sur le premier composant en rubis chassé dans l'alésage du second composant, et sur un composant de référence;
La figure 6 reporte les valeurs du décalage Raman calculées sur la base du nombre d'onde du pic autour de 416 cm⁻¹ du spectre Raman mesuré pour le premier composant chassé et le même pic du spectre Raman mesuré pour le composant de référence; et
La figure 7 montre des valeurs moyenne et médiane de décalage Raman calculées pour le pic autour de 416 cm⁻¹ du spectre Raman mesurés sur le premier composant en rubis chassé.

### Exemple(s) de mode de réalisation de l'invention

La présente invention concerne une méthode de contrôle de la qualité d'un assemblage d'au moins un premier composant micromécanique avec un second composant micromécanique. Selon un mode de réalisation, la méthode comporte les étapes de:
fournir un système de spectrométrie Raman configuré pour mesurer un spectre Raman;
fournir ledit au moins un premier composant assemblé au second composant, au moins l'un des composants présentant des contraintes mécaniques d'assemblage lorsqu'assemblés;
mesurer un spectre Raman pour au moins l'un des le premier composants assemblés et présentant des contraintes mécaniques d'assemblage, le spectre Raman comportant au moins un pic;
déterminer un nombre d'onde pour ledit au moins un pic mesuré;
calculer un décalage Raman correspondant à la différence entre le nombre d'onde de pic déterminé et un nombre d'onde de référence; et
déterminer une première valeur de seuil sur la base du décalage Raman calculé, de manière à caractériser la qualité de l'assemblage.

Dans le cas où le du spectre Raman comporte plusieurs pics, le calcul du décalage Raman et la détermination de la valeur seuil peuvent être répétées pour tous les pics du spectre Raman.

L'assemblage comprend typiquement des composants micromécaniques, par exemple des composants horlogers.

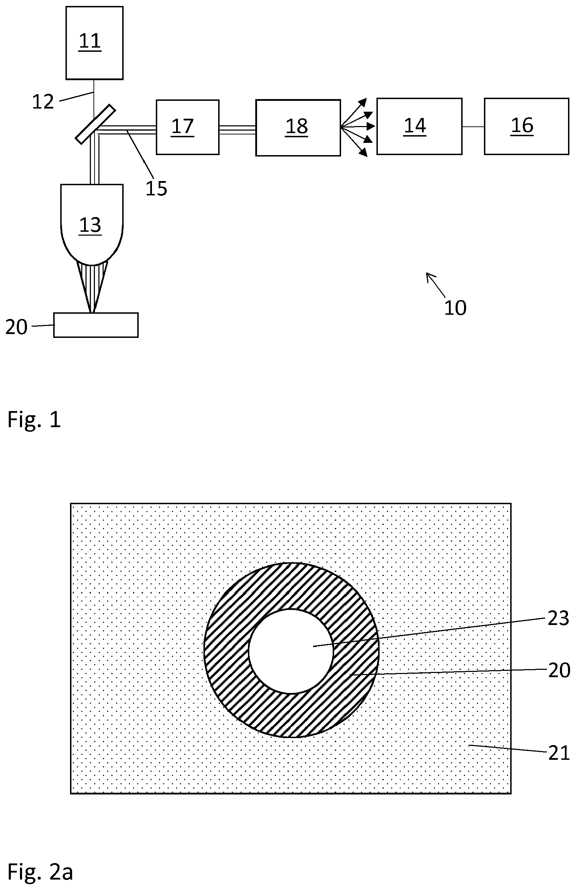

La **figure 1** illustre schématiquement un système de spectrométrie Raman 10 comportant une source lumineuse 11 destinée à émettre une lumière d'excitation 12, un système optique 13 destiné à guider la lumière d'excitation vers des points de mesure d'un composant 20. Le système de spectrométrie Raman 10 comporte également un dispositif de détection 14 de la lumière diffusée 15 par le composant 20 présentant des contraintes mécaniques, et un dispositif d'analyse 16 de la lumière émise par diffusion destiné à mesurer le spectre de la lumière diffusée.

Le système de spectrométrie Raman 10 utilise le principe de la diffusion Raman. La source lumineuse 11 peut comprendre un laser dont la longueur d'onde peut varier selon les utilisations. Le coefficient d'absorption de celle-ci dans le matériau détermine la profondeur de pénétration et influence le volume de matière contribuant au signal. De manière préférée pour la mesure des contraintes dans la masse du composant, la longueur d'onde est sensiblement transparente pour le matériau constituant le composant 20. Le système optique 13 peut comprendre un objectif de microscope afin de focaliser la source lumineuse 11 sur le composant 20. Le système optique 13 peut être configuré pour obtenir un diamètre de la source lumineuse 11 focalisée sur le composant de quelques mm à 1 µm. Par exemple le diamètre de la source lumineuse 11 focalisée peut être compris entre 100 et 10 µm, ou entre 50 et 20 µm, selon la taille du premier composant 20 et la résolution spatiale souhaitée. Dans le cas de composants micromécaniques, tels que les composants horlogers, le diamètre de la source lumineuse 11 focalisée est préférablement entre 1 et 100 µm. Le volume mesuré dans le matériau peut être typiquement entre 1 et 1000 µm³, mais préférablement entre 1 et 20 µm³, par exemple 2 µm³.

Selon une variante non représentée, le système optique 13 peut comprendre une fibre optique (sonde fibrée) permettant de guider la lumière d'excitation vers des points de mesure du composant 20 et la lumière diffusée vers le dispositif de détection 14.

La lumière diffusée 15 est ensuite récupérée par le système optique 13 et par le dispositif de détection 14. Le système de spectrométrie Raman 10 peut comprendre un filtre optique 17 configuré pour éliminer la contribution de la lumière diffusée élastiquement (diffusion Rayleigh) et ne garder que la contribution inélastique à la diffusion (diffusion Raman) 15. Le système de spectrométrie Raman 10 peut également comprendre un monochromateur 18 permettant de séparer spatialement la lumière diffusée 15 aux différentes longueurs d'ondes, à la manière d'un prisme. Le dispositif de détection 14 peut être configuré pour compter l'intensité de la lumière diffusée 15 en nombre de photons par secondes. Le dispositif de détection 14 peut comprendre un capteur de type CCD. La résolution spectrale du dispositif de détection 14 peut être comprise entre 0.1 et 1 cm⁻¹.

Le dispositif d'analyse 16 restitue un spectre Raman de la lumière diffusée 15. Un spectre Raman comporte un certain nombre de pics caractéristiques du matériau du composant 20. Le spectre est lié aux différents mode de vibration de l'arrangement atomique du matériau, qui contribuent à la diffusion inélastique de la lumière incidente. Chaque pic peut être caractérisé par un nombre d'onde (en cm⁻¹) relatif à la longueur d'onde de la source lumineuse 11. Le spectre Raman est donc un spectre de la différence en nombre d'onde de la lumière diffusée inélastiquement par rapport à la fréquence incidente de la source lumineuse 11. Le nombre d'onde *k* est donné par: *k* = 2π / λ, où λ est la longueur d'onde de la lumière.

Le faisceau laser de la source lumineuse 11 est polarisé linéairement. Seuls certains modes de vibrations sont observés en fonction de l'orientation angulaire du composant 20 par rapport à l'axe de polarisation de la source lumineuse 11, selon l'orientation cristallographique du matériau constituant le composant 20. Selon une forme d'exécution, la position angulaire du composant 20 relative à l'axe de polarisation est variée pendant la mesure du spectre Raman, de manière à ce que tous les pics du spectre Raman soient présents. Préférablement, la position angulaire relative du composant 20 varie sur 180° pendant la mesure du spectre Raman.

Le décalage du nombre d'onde de chacun des pics peut être utilisé pour caractériser les contraintes mécaniques dans l'assemblage. Dans le mode de réalisation décrit ici, le décalage du nombre d'onde mesuré pour le composant 20 correspond au déplacement des pics par rapport à une position de référence (nombre d'onde de référence), par exemple mesurée pour le composant 20 en absence de contrainte. En effet, les contraintes mécaniques modifient la position des pics Raman (De Wolf "Micro-Raman spectroscopy to study local mechanical stress in silicon integrated circuits", Semicond. Sci. Technol. (1996)).

La méthode peut comporter une étape d'homogénéisation des contraintes. Une telle étape d'homogénéisation peut comprendre un recuit d'un des composants ou préférablement un recuit de l'assemblage.

L'étape de mesurer un spectre Raman peut comprendre une seule mesure sur le composant 20 assemblé ou comprendre une pluralité de mesures du spectre Raman. La pluralité de mesures peut être réalisée à différentes positions sur le composant 20. Dans ce cas, le nombre d'onde peut être déterminé selon une moyenne et un écart-type d'un nombre d'onde pour chaque mesure.

Selon une forme d'exécution, le nombre d'onde de référence est déterminé par une étape de calibration du système de spectrométrie Raman 10 à une ou plusieurs intensités d'excitation. Un exemple de réalisation d'une telle étape de calibration est décrite dans la référence: Noguchi et al. « Imaging of internai stress around a minerai inclusion in a sapphire crystal: application of micro-Raman and photoluminescence spectroscopy", J. Raman Spectrosc. (2012).

Selon une autre forme d'exécution, la méthode comporte une étape de mesurer un spectre Raman de référence pour un composant de référence à une ou plusieurs intensités d'excitation et de déterminer un nombre d'onde de référence à partir du spectre Raman de référence à une ou plusieurs intensités d'excitation. Le composant de référence peut comprendre le composant 20 en absence de contrainte mécaniques d'assemblage.

La mesure d'un spectre Raman de référence pour un composant de référence permet de contrôler la dérive du système de spectrométrie Raman 10 ainsi une possible variation du spectre Raman mesuré avec la température. La mesure d'un spectre Raman de référence peut être réalisée avant chaque mesure sur le ou les composants 20 assemblés.

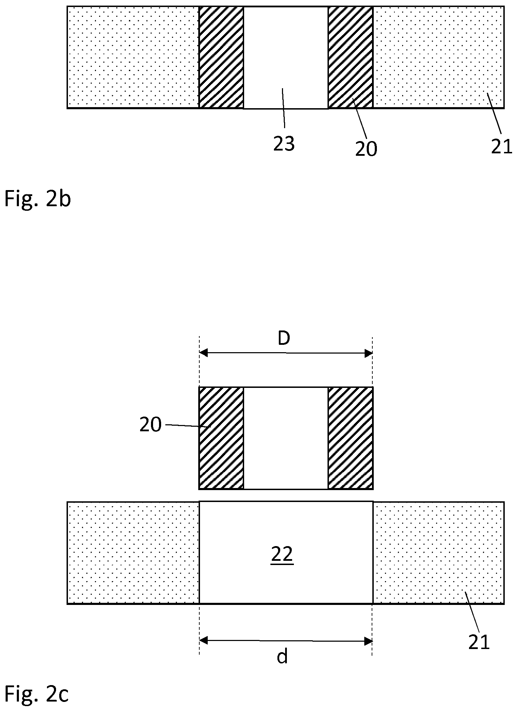

Selon un mode de réalisation particulier, un premier composant 20 est chassé dans un alésage d'un second composant 21. La **figure 2a** montre une vue de dessus et la **figure 2b** montre une vue en section du premier composant 20 chassé dans un alésage du second composant 21. La **figure 2c** montre une vue en éclaté du premier composant 20 avant le chassage dans l'alésage 22 du second composant 21. Dans l'exemple des figures 2a-c, le premier composant 20 prend la forme d'un coussinet chassé dans second composant 21 qui peut comprendre, par exemple une plaque, une platine ou un pont. Le premier composant 20 comporte une ouverture 23. Le diamètre extérieur D du premier composant 20 est typiquement légèrement plus grand que celui du diamètre d de l'alésage 22 (voir figure 2c) afin d'obtenir un serrage (tenue) suffisant pour résister à une sollicitation axiale ou tangentielle du premier composant 20 chassé dans le second composant 21 selon la fonction recherchée dans l'assemblage.

Selon le procédé de chassage, la tenue mécanique de l'attachement du premier composant 20 chassé dans le second composant 21 est assurée par le frottement statique à l'interface entre ces composants 20, 21. Ce frottement est dû à la différence de dimensions entre le premier composant 20 et le deuxième 21. Cette différence est souvent appelée interférence. Dans notre exemple de réalisation, cette interférence engendre une dilatation du second composant 21 et une compression du premier composant 20 dont la combinaison crée une pression normale à leur interface. Cette pression est à l'origine du frottement.

Les forces de serrage doivent être suffisamment élevées de manière à permettre une bonne tenue mécanique du premier composant 20 dans le second 21. Par ailleurs, des forces de serrage e trop élevées peuvent conduire à la rupture du premier composant 20 lors du chassage ou après le chassage dans le second composant 21. Cela est particulièrement critique dans le cas où le premier composant 20 est fabriqué dans un matériau fragile. Le premier composant 20 peut cependant être constitué dans tout autre matériau approprié, tel que le silicium, une céramique, le diamant, le verre, etc. L'assemblage n'est pas limité à une géométrie cylindrique.

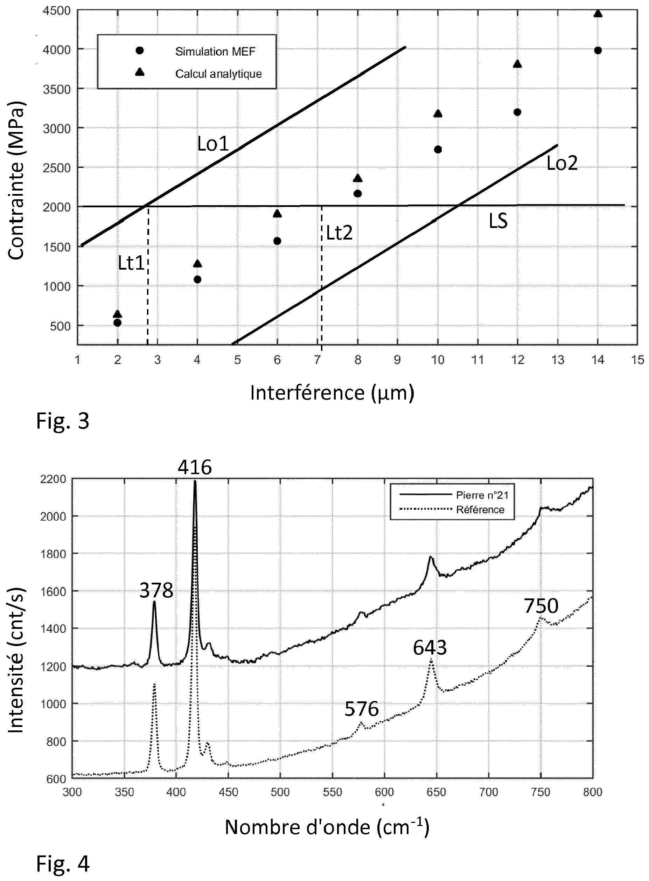

La **figure 3** montre un exemple des valeurs scalaires des contraintes statiques dans le premier composant 20 chassé dans le second composant 21. Plus particulièrement, la figure 3 reporte la valeur de la contrainte (calculée selon le critère de Von Mises) en fonction de l'interférence, correspondant à la différence entre le diamètre extérieur D du premier composant 20 et le diamètre d de l'alésage 22 (voir figure 2c). La contrainte dans le premier composant 20 est calculée analytiquement (triangles) et par une simulation par éléments finis (points). La contrainte augmente avec l'interférence (c'est-à-dire le serrage entre le premier composant 20 et le second composant 21). Sur la figure 3, les deux lignes obliques Lo1 et Lo2, représentent la tolérance dimensionnelle du diamètre extérieur D du premier composant 20. La ligne horizontale (ou ligne de seuil) LS délimite la contrainte au-dessus de laquelle il y a une forte probabilité de cassure du premier composant 20. La ligne en traitillé de gauche Lt1 indique la valeur d'interférence (ici 3 µm) au-dessous de laquelle la résistance à une sollicitation axiale ou tangentielle (tenue mécanique) du premier composant 20 dans l'alésage 22 n'est pas suffisante et la ligne en traitillé de droite Lt2 indique la valeur d'interférence (ici 8 µm) au-dessus de laquelle la contrainte est trop élevée et a une forte probabilité de résulter dans la cassure du premier composant 20, lorsque chassé. Autrement dit, la qualité de l'assemblage du premier composant 20 avec le second composant 21 sera bonne, c'est-à-dire la tenue mécanique du premier composant 20 chassé dans l'alésage 22 du second composant 21 sera suffisante (pour une application donnée), pour les conditions à l'intérieur des différentes lignes Lo1, Lo2, LS, Lt1, Lt2.

La première valeur de seuil S1 peut alors correspondre à une valeur prédéterminée de tenue mécanique du premier composant 20 dans l'alésage du second composant 21. Par exemple, dans l'exemple de la figure 3, la première valeur de seuil S1 peut correspondre à une valeur de contrainte autour de 500 MPa, au-dessus de laquelle la tenue mécanique du premier composant 20 est suffisante.

Selon une forme d'exécution, une seconde valeur de seuil S2 peut être déterminée de manière à caractériser la qualité de l'assemblage. Par exemple, la seconde valeur de seuil S2 peut correspondre à une valeur au-dessus de laquelle il y a une probabilité non nulle de cassure du premier composant 20, voir une forte probabilité de cassure du premier composant 20. Dans l'exemple de la figure 3, la seconde valeur de seuil S2 peut correspondre à une valeur de contrainte autour de 2000 MPa (correspondant à la ligne de seuil LS), au-dessus de laquelle il y a une forte probabilité de cassure du premier composant 20.

La probabilité de cassure du premier composant 20 peut être caractérisé par une loi probabiliste décrite par une distribution statistique de type Weibull. Une telle distribution permet de calculer la probabilité de cassure en introduisant une contrainte caractéristique où 63.2% des échantillons sont cassés ainsi qu'un paramètre d'ajustement appelé module de Weibull. Le niveau de confiance peut être défini comme la probabilité que l'occurrence de cassure se trouve à l'intérieur d'une fourchette d'incertitude donnée. Le niveau de confiance déterminant le seuil d'acceptabilité des contraintes sans rupture est fixé par les exigences de qualité propres à l'application et à l'entité pratiquant le contrôle. Par exemple, le niveau de confiance peut être fixé à 68%, 95% ou 99%. La seconde valeur de seuil S2 peut donc correspondre à un niveau de confiance d'une distribution statistique de type Weibull de l'occurrence de rupture du composant.

De manière générale, le premier composant 20 et/ou le second composant 21 correspond au composant présentant des contraintes mécaniques d'assemblage. Le spectre Raman peut donc être mesuré pour le premier composant 20 et/ou le second composant 21 assemblés, de manière à déterminer la première valeur de seuil S1 et la seconde valeur de seuil S2.

Selon un mode de réalisation, le premier composant 20 est un coussinet en rubis, chassé dans le second composant 21. Le second composant 21 peut comprendre une platine ou un pont en acier ou tout autre matériau approprié.

La **figure 4** montre un spectre Raman mesuré entre 300 cm⁻¹ et 800 cm⁻¹, sur un premier composant 20 en rubis chassé dans l'alésage 22 du second composant 21 (trait plein). Le spectre Raman mesuré comprend des pics autour des nombres d'ondes 378, 416, 576, 645 et 750 cm⁻¹. La figure 4 montre également un spectre Raman mesuré pour la même gamme de nombre d'onde, sur un composant de référence (traitillé). Le composant de référence peut correspondre au premier composant 20 en absence de contrainte mécaniques.

Un décalage Raman D_{R} peut être calculé entre le nombre d'onde de chacun des pics du spectre Raman mesuré pour le premier composant 20 chassé et le nombre d'onde de chacun des pics correspondants du spectre Raman mesuré pour le composant de référence. Le décalage Raman D_{R} correspond alors aux contraintes mécaniques dans le premier composant 20 chassé.

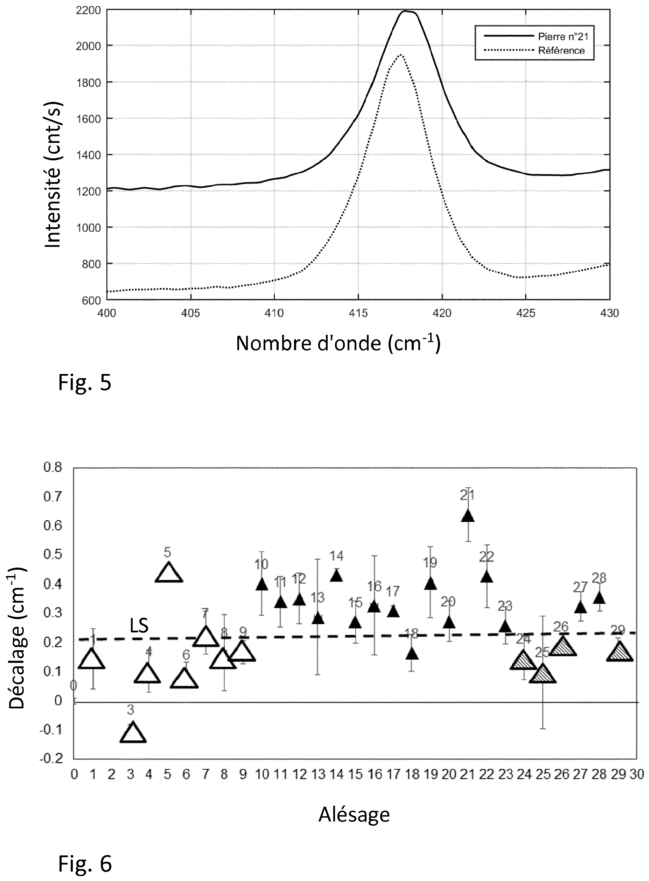

Alternativement, un nombre d'onde peut être mesuré pour un seul pic du spectre Raman. Dans le cas du rubis, le nombre d'onde est préférablement mesuré pour le pic autour de 416 cm⁻¹. La **figure 5** montre un détail du pic autour de 416 cm⁻¹, mesuré sur le premier composant 20 en rubis chassé dans l'alésage 22 du second composant 21 (trait plein) et sur composant de référence (traitillé).

La première valeur de seuil S1 peut alors être déterminée sur la base du décalage Raman D_{R} calculé de manière à caractériser la qualité de l'assemblage entre le premier composant 20 et le second composant 21.

En particulier, il est possible d'associer la première valeur de seuil S1 à un décalage Raman D_{R} calculé qui correspond à la contrainte au-dessus de laquelle la tenue mécanique du premier composant 20 chassé est suffisante. La tenue mécanique du premier composant 20 peut être déterminée expérimentalement par une opération de déchassage. Cette opération est cependant destructive. Alternativement, la tenue mécanique du premier composant 20 peut être déterminée par une mesure d'une force de chassage du premier composant 20 chassé dans l'alésage 22 du second composant 21.

Comme discuté ci-dessus, il est également possible d'associer la seconde valeur de seuil S2 à un décalage Raman D_{R} calculé qui correspond à la contrainte au-dessous de laquelle il y a une forte probabilité de cassure du premier composant 20. La cassure résulte en général dans la libération des contraintes d'assemblage et son occurrence peut être indépendamment vérifiée à l'aide d'un contrôle optique manuel ou automatique.

Une étape d'homogénéisation des contraintes d'assemblage peut comprendre un recuit. Par exemple, le recuit peut être réalisé en chauffant l'assemblage à une température entre 100°C et 250°C selon la différence entre les coefficients de dilatation des matériaux constitutifs des deux composants assemblés. La durée du recuit peut être autour de 2h. D'autres traitements de recuit sont cependant envisageables.

La **figure 6** reporte les valeurs de décalage Raman D_{R} calculées sur la base du nombre d'onde du pic autour de 416 cm⁻¹ du spectre Raman mesuré pour le premier composant 20 chassé et le même pic du spectre Raman mesuré pour le composant de référence.

La première valeur de seuil S1 est également représentée à la figure 6 par la ligne en traitillé LS. Les valeurs de décalage Raman D_{R} calculées se trouvant au dessus de la première valeur de seuil S1 peuvent se référer à une contrainte au-dessus de laquelle la tenue mécanique du premier composant 20 chassé est suffisante (triangles noirs). Les valeurs de décalage Raman D_{R} calculées se trouvant au dessous de la première valeur de seuil S1 peuvent se référer à une contrainte au-dessous de laquelle la tenue mécanique du premier composant 20 chassé est insuffisante (triangles blancs). La ligne en traitillé LS peut également représenter la seconde valeur de seuil S2 (confondue avec la première valeur de seuil S1). Les valeurs de décalage Raman D_{R} calculées se trouvant au-dessous de la seconde valeur de seuil S2 (triangles hachurés) correspondant à une contrainte plus faible que celle des premiers composants 20 chassés ayant une tenue mécanique suffisante, due à la cassure des composant 20.

Les valeurs de décalage Raman D_{R} calculées permettent donc de caractériser la qualité du chassage, c'est-à-dire d'identifier les premiers composants 20 chassés ayant une tenue mécanique suffisante.

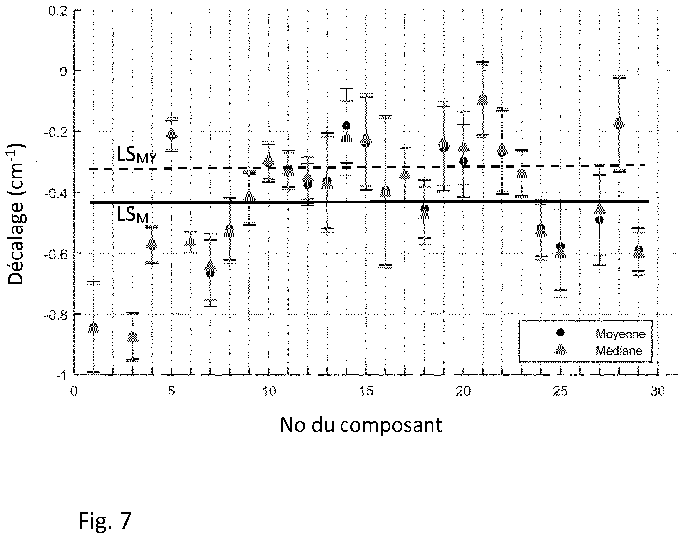

La **figure 7** montre des valeurs de décalage Raman D_{R} calculées pour le pic autour de 416 cm⁻¹ de spectre Raman mesurés sur le premier composant 20 en rubis chassé. En particulier, un spectre Raman a été mesuré sur huit points de mesures effectués sur le pourtour du premier composant 20. Les barres d'erreurs représentent l'écart-type de ces différentes mesures. Les points représentent la valeur de décalage Raman D_{R} moyenne et les triangles représentent la valeur de décalage Raman D_{R} médiane. La première valeur de seuil S1 et la seconde valeur de seuil S2 peuvent être déterminées à partir de la valeur de décalage Raman D_{R} médiane (LS_{MD}) ou de la valeur de décalage Raman D_{R} moyenne (ligne LS_{MY}).

La première valeur de seuil S1 peut donc être sensiblement la même que la seconde valeur de seuil S2 ou encore, la seconde valeur de seuil S2 peut différer de la première valeur de seuil S1.

Il va de soi que la présente invention n'est pas limitée au mode de réalisation qui vient d'être décrit et que diverses modifications et variantes simples peuvent être envisagées par l'homme de métier sans sortir du cadre de la présente invention.

Par exemple, la méthode de contrôle décrite ici peut être appliquée à la caractérisation de composants chassés tels qu'une roue sur un arbre, une aiguille ou mobile sur un axe, une pierre d'appui contre-pivot chassée. La méthode de contrôle peut également être appliquée à la caractérisation d'autres types d'assemblages tels qu'un spiral fixé sur une virole, une plaque de verre sur un cadran, ou de tout autres assemblages de composants d'un mécanisme horloger ou d'habillage horloger présentant des contraintes mécaniques d'assemblage pouvant être mesurées pas la spectroscopie Raman. Par exemple, l'assemblage peut être tout type d'assemblage générant des contraintes dans au moins l'un des composants 20, 21, tel qu'un assemblage par soudure, etc.

La méthode de contrôle peut également être utilisée pour l'assemblages de composants pour des applications de micromécanique, de bijouterie, de lunetterie, d'instruments d'écriture, d'instruments d'optique, ou de dispositifs médicaux.

### Numéros de référence employés sur les figures

- 10: système de spectrométrie Raman
- 11: source lumineuse
- 12: lumière d'excitation
- 13: système optique
- 14: dispositif de détection
- 15: lumière émise
- 16: dispositif d'analyse
- 17: filtre optique
- 18: monochromateur
- 20: premier composant
- 21: second composant
- 22: alésage
- 23: ouverture
- D_{R}: décalage Raman
- *k*: nombre d'onde
- LS: ligne de seuil
- S1: première valeur de seuil
- S2: seconde valeur de seuil

## Revendications

1. Méthode de contrôle de la qualité d'un assemblage d'au moins un premier composant micromécanique (20) avec un second composant micromécanique (21), la méthode comportant les étapes de:
fournir un système de spectrométrie Raman (10) configuré pour mesurer un spectre Raman;
fournir ledit au moins un premier composant (20) assemblé au second composant (21), au moins l'un des composants (20, 21) présentant des contraintes mécaniques d'assemblage lorsqu'assemblés;
mesurer un spectre Raman pour au moins l'un des composants (20, 21) assemblés et présentant des contraintes mécaniques d'assemblage, le spectre Raman comportant au moins un pic;
déterminer un nombre d'onde pour ledit au moins un pic du spectre Raman mesuré;
calculer un décalage Raman (D_{R}) correspondant à la différence entre le nombre d'onde déterminé et un nombre d'onde de référence; et
déterminer au moins une première valeur de seuil (S1) sur la base du décalage (D_{R}), de manière à caractériser la qualité de l'assemblage.

2. Méthode selon la revendication 1,
comprenant une étape de calibration du système de spectrométrie Raman (10) de manière à déterminer le nombre d'onde de référence.

3. Méthode selon la revendication 1,
comprenant une étape de fournir un composant de référence correspondant au premier composant (20) en absence de contrainte mécaniques d'assemblage;
de mesurer un spectre Raman de référence pour le composant de référence; et
de déterminer le nombre d'onde de référence pour au moins un pic du spectre Raman de référence mesuré.

4. Méthode selon l'une des revendications 1 à 3,
dans laquelle le premier composant (20) est chassé dans un alésage (22) du second composant (21); et
dans laquelle la première valeur de seuil (S1) correspond à une valeur prédéterminée de tenue mécanique du premier composant (20) dans l'alésage (22) du second composant (21).

5. Méthode selon la revendication 4,
comprenant une étape de déterminer une seconde valeur de seuil (S2) sur la base du décalage (D_{R}), au-dessus de laquelle il y a une probabilité non nulle de cassure du premier composant (20).

6. Méthode selon la revendication 5,
dans laquelle la seconde valeur de seuil (S2) correspond à un niveau de confiance d'une distribution statistique de type Weibull de l'occurrence de rupture du premier composant (20).

7. Méthode selon la revendication 5,
dans laquelle la seconde valeur de seuil (S2) est déterminée sur la base d'un contrôle optique.

8. Méthode selon l'une des revendications 5 à 7,
dans laquelle la seconde valeur de seuil (S2) diffère de la première valeur de seuil (S1).

9. Méthode selon l'une des revendications 5 à 7,
dans laquelle la première valeur de seuil (S1) et la seconde valeur de seuil (S2) sont sensiblement les mêmes.

10. Méthode selon l'une des revendications 1 à 9,
dans laquelle le spectre Raman comporte une pluralité de pics, et
dans laquelle un nombre d'onde est mesuré pour chacun des pics.

11. Méthode selon l'une des revendications 1 à 9,
dans laquelle un nombre d'onde est mesuré pour un seul pic du spectre Raman.

12. Méthode selon l'une des revendications 1 à 11,
dans laquelle le premier composant (20) comprend un coussinet en rubis.

13. Méthode selon la revendication 12,
dans laquelle le spectre Raman est mesuré entre 300 cm⁻¹ et 800 cm⁻¹.

14. Méthode selon la revendication 11 et 12,
dans laquelle le pic du spectre Raman est autour de 416 cm⁻¹.

15. Appareil de contrôle de la qualité d'un assemblage d'au moins un premier composant micromécanique (20) avec un second composant micromécanique (21), comportant un système de spectrométrie Raman (10) comprenant une source lumineuse (11) destinée à émettre une lumière d'excitation (12), un système optique (13) destiné à guider la lumière d'excitation vers des points de mesure du premier composant (20), un dispositif de détection (14) d'une lumière diffusée Raman (15) par les points de mesure, un dispositif d'analyse (16) de la lumière diffusée (15) destiné à mesurer un spectre Raman de la lumière diffusée (15);
l'appareil étant configuré pour exécuter la méthode selon les revendications 1 à 14.
